# EUROPEAN PATENT APPLICATION

(11) **EP 2 302 909 A1**
(43) Date of publication of application: **30.03.2011**
(21) Application number: 10178307.4
(22) Date of filing: 22.09.2010
(51) Int. Cl.: H04N 5/44

(54) **Remote operation device, remote operation device system, remote operation method and program**

(30) Priority: 29.09.2009 JP 2009224985
(71) Applicant: Sony Corporation, Tokyo 180-0075 (JP)
(72) Inventor: Yamada, Eiju, Tokyo 108-0075 (JP); Ohashi, Yoshinori, Tokyo 108-0075 (JP)
(74) Representative: Körber, Martin Hans

(57) **Abstract**

There is provided a remote operation device including a display panel for displaying a predetermined operation screen, a detection unit for detecting an operation input to the display panel, a remote operation unit for remotely operating an electronic device in accordance with the operation input, a state information obtaining unit for obtaining state information that indicates a state of the electronic device from the electronic device, and a display control unit for displaying an operation screen corresponding to the status information in accordance with a change in the state of the electronic device.

## Description

### BACKGROUND OF THE INVENTION

### Field of the Invention

The present invention relates to a remote operation device, a remote operation device system, a remote operation method and a program.

### Description of the Relat ed Art

As a remote operation device to operate remotely an electronic device (hereinafter referred to also as "remote controller"), a remote controller equipped with a touch panel display has been well known. In this kind of remote controller, the touch panel display displays an operation screen including an icon in a graphical user interface (GUI) that is assigned each function of the electronic device. Then the electronic device is operated remotely by an operation of icon on the operational screen. Such remote controller can flexibly change a specification of the operation screen according to a function change of the electronic device.

However, since a size of the operation screen is automatically restricted depending on a size of the remote controller, as the number of icons increase, it becomes difficult to display all the icons on an operation screen. Then, a user needs to switch the operation screen to be displayed manually depending on the status of the electronic device and operates a desired icon. As the number of operation screen increases, it may force the user to perform a complicated switching operation on the operation screen.

In light of the foregoing, it is desirable to provide a remote operation device, a remote operation device system, a remote operation method and a program, capable of manipulating easily a desired icon on a touch panel display.

### SUMMARY OF THE INVENTION

Various aspects and features of the invention are defined in the appended claims.

According to the first embodiment of the present invention, there is provided a remote operation device including a display panel for displaying a predetermined operation screen, a detection unit for detecting an operation input to the display panel, a remote operation unit for remotely operating an electronic device in accordance with the operation input, a state information obtaining unit for obtaining state information that indicates a state of the electronic device from the electronic device, and a display control unit for displaying an operation screen corresponding to the state information on the display panel in accordance with a change in the state of the electronic device.

According to such configuration, state information that indicates a state of the electronic device is obtained from the electronic device, and a predetermined operation screen corresponding to the state information is displayed on a display panel in accordance with a change in the state of the electronic device. This enables the user to operate easily a desired icon on the operation screen corresponding to the state of the electronic device without switching the operation screen manually.

Moreover, the remote operation device above may further include a device selection unit for selecting the electronic device to be operated remotely. Here, the remote operation device above may further include an operation screen information retaining unit for retaining operation screen information to generate an operation screen corresponding to each electronic device, and an operation screen generating unit for generating an operation screen corresponding to the selected electronic device based on the operation screen information. Further, the remote operation device may further include an operation screen list obtaining unit for obtaining an operation screen list corresponding to the selected electronic device from the electronic device, and an operation screen information obtaining unit for obtaining, from the electronic device, generation information of an operation screen that has not been obtained among the operation screens included in the list obtained.

The state information obtaining unit may obtain the change in the state notified by the electronic device as the state information. The state information obtaining unit may obtain regularly the state information from the electronic device.

The change in the state of the electronic device may be at least one of either a change depending on the operation input or a change not depending on the operation input.

According to the second embodiment of the present invention, there is provided a remote operation method that includes the remote operation device above and an electronic device operated remotely by a remote operation device.

According to the third embodiment of the present invention, there is provided a remote operation method including obtaining state information that indicates a state of the electronic device from the electronic device, displaying a predetermined operation screen corresponding to the state information on a display panel in accordance with a change in the state of the electronic device; and detecting an operation input to the display panel to remotely operate the electronic device in accordance with the operation input.

According to the forth embodiment of the present invention, there is provided a program to a computer to execute the above-mentioned remote operation method. Here the program may be provided using a computer readable recording medium, or may be provided via a communication method.

According to the present invention, it is possible to provide a remote operation device, a remote operation device system, a remote operation method and a program, capable of manipulating easily a desired icon on a touch panel display.

### BRIEF DESCRIPTION OF THE DRAWINGS

Embodiments of the invention are now described with reference to the enclosed drawings, throughout which like parts are referred to be like references, and in which
FIG. 1 is a diagram showing an overview of a remote controller system according to an embodiment of the present invention;
FIG. 2 is a block diagram showing primary functional components of the remote controller system;
FIG. 3 is a diagram showing an example of correspondence relationship among a state of an electronic device, an operation screen, and code information;
FIG. 4A is a sequence diagram showing an operation of the remote controller system;
FIG. 4B is a sequence diagram showing an operation of the remote controller system;
FIG. 5 is a diagram showing an example of a device selection screen;
FIG. 6 is a diagram showing an example of an operation screen list;
FIG. 7A is a diagram showing an example of generation of an operation screen;
FIG. 7B is a diagram showing an example of generation of an operation screen;
FIG. 8 is a diagram showing an example of an operation screen; and
FIG. 9 is a diagram showing an example of operation of the remote controller system.

### DETAILED DESCRIPTION OF THE EMBODIMENT(S)

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

### [1. The remote controller system]

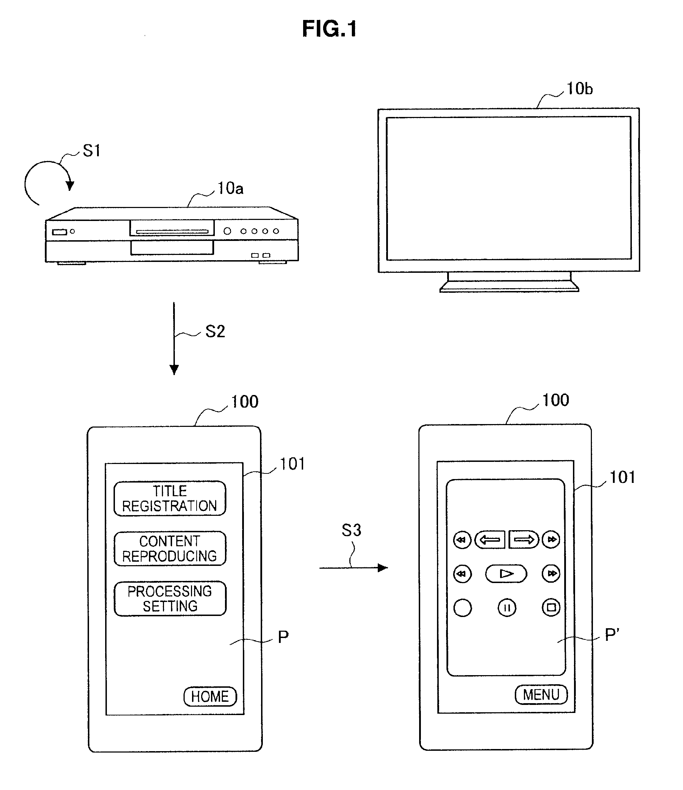

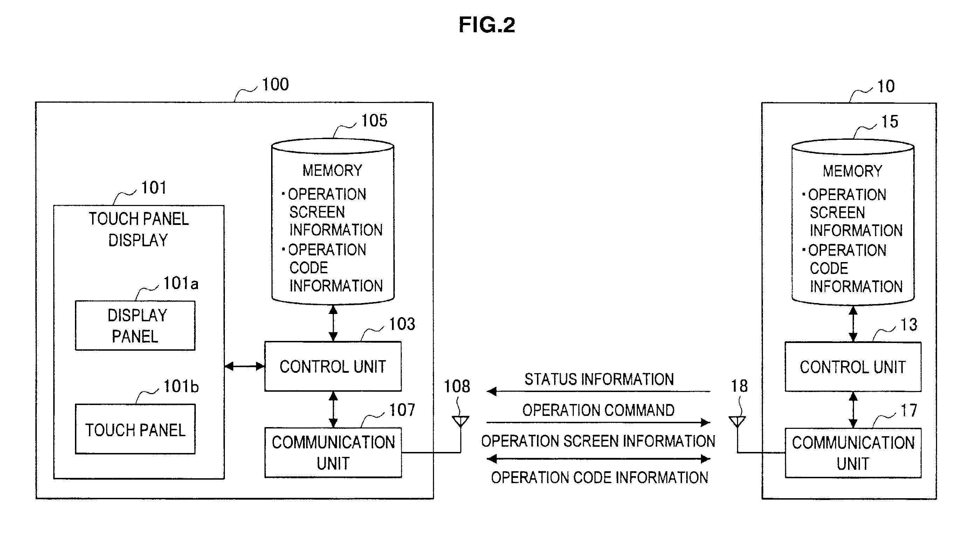

Hereinafter, with reference to FIG. 1 and 2, an explanation will be given on the remote controller system according to an embodiment of the present invention. FIG. 1 is a diagram showing an overview of a remote controller according to an embodiment of the present invention. FIG. 2 is a block diagram showing primary functional components of the remote controller system.

As shown in FIG. 1, the remote controller system includes a remote controller 100 equipped with a touch panel display 101, and at least one electronic device 10 remotely operated via the remote controller 100. Note that in FIG. 1, as an example of the electronic device 10, a DVD player 10a and a television 10b are illustrated.

Between the remote controller 100 and the electronic device 10, a wired or wireless two-way communication is performed. Note that the two-way communication may be performed in a direct manner or in an indirect manner via a network or the like which is not shown here.

The remote controller 100 stores operation screen information for generating an operation screen P, and operation code information for remotely controlling the electronic device 10. The operation screen information is information for generating the operation screen P that includes an icon I assigned each functions of the electronic device 10. The each operation screen P includes the icon I that is operated in accordance with each state of the electronic device 10. Operation code information is information for generating operation commands to control the electronic device 10 to execute the each function of the electronic device 10.

The electronic device 10 stores the operation screen information and the operation code information, and transmits the stored information to the remote controller 100 in response to an obtaining request from the remote controller 100. Moreover, the electronic device 10 transmits status information that indicates its current status to the remote controller 100.

If a user U selects the electronic device 10, the remote controller 100 generates the operation screen P to operate the selected electronic device 10 (hereinafter referred to also as "the selected device 10") based on the operation screen information, and displays it on the touch panel display 101. If the user U operates the desired icon I on the operation screen P, the remote controller 100 generates the operation command corresponding to the operated icon I based on the operation code information, and transmits it to the selected device 10. When received the operation command, the selected device 10 executes a function corresponding to the operation command based on the operation code information.

Here, the remote controller 100 receives the status information that indicates the current status from the selected device 10 (S2) in accordance with a state change (S1) of the selected device 10 (corresponds to the DVD player 10a in FIG. 10). Then the remote controller 100 displays an operation screen P' corresponding to the state of the selected device 10 which the status information indicates in place of the operation screen P (S3). This enables the user U to easily operate the desired icon I on the operation screen P' which is displayed according to the state change of the selected device 10.

In FIG. 2, a functional configuration of the remote controller 100 and the electronic device 10. The remote controller 100 includes a touch panel display 101, a control unit 103, a memory 105 and a communication unit 107. The electronic device 10 includes a control unit 13 and a memory 15 and a communication unit 17. Note that FIG. 2 illustrates only the primary functional configuration according to the present invention.

At first, the functional configuration of the remote controller 100 will be explained. The touch panel display 101 has a configuration that is layered a touch panel display 101b (a detection unit) on a display panel 101a. As the touch panel display 101a, a liquid crystal display (LCD) or the like is used. As the touch panel display 101b, a resistive touch panel, a capacitive touch panel, an ultrasonic touch panel, and an infrared touch panel or the like are to be used.

The display panel 101a displays the device selection screen P0, and the operation screen P or the like. The touch panel 101b detects an operation input by a pointer on the panel surface. Note that the pointer is a finger of the user U, a stylus pen, a pointing device, or the like.

The control unit 103 includes a CPU, a RAM, a ROM or the like. The CPU use the RAM as a working memory to execute a program stored in the ROM, and controls each unit of the remote controller 100. The program functions as a remote operation unit for remotely operating the electronic device 10, a status information obtaining unit for obtaining status information of the electronic device 10, and a display control unit for controlling a display of the display panel 101a. Further, the program also function as a device selection unit, an operation screen generating unit, an operation screen list obtaining unit, and an operation screen information obtaining unit.

The memory 105 is a nonvolatile memory such as EEPROM, and stores the operation screen information, the operation code information, data of the icon I, or the like. The operation screen information and the operation code information are associated to the corresponding electronic device 10 and the state of electronic device 10. Further, the operation code information corresponding to the icon I that is included in the operation screen P is associated to the operation screen information.

The communication unit 107 receives the operation screen information, the operation code information, and the status information or the like form the electronic device 10 via an antenna 108, and transmits the operation command or the like to the electronic device 10. The communication unit 107 performs a two-way wireless communication in the same communication method with the communication unit 17 of the electronic device 10

The control unit 103 controls the display panel 101a to display the device selection screen P0 which encourages the user U to select the electronic device 10 that is an operation object. When the user U selects the electronic device 10 on the device selection screen P0, the control unit 103 controls the display panel 101a to display the operation screen P corresponding to the electronic device 10 based on the operation screen information.

When the user U manipulates the desired icon I on the operation screen P, the control unit 103 controls the communication unit 107 to transmit an operation command corresponding to the manipulated icon I to the selected device 10, based on the operation code information.

Here, the control unit 103 receives the status information that indicates the current state in accordance with the state change of the selected device 10 from the selected device 10 via the communication unit 107. When the state of the selected device 10 is changed, the control unit 103 controls the display panel 101a to display the operation screen P corresponding to the state of the selected device 10 which the status information indicates.

Next, the functional configuration of the electronic device 10 will be described. The control unit 13 includes a CPU, a RAM, and a ROM, for example, and controls each unit of the electronic device 10. The memory 15 is a nonvolatile memory such as an EEPROM, which stores therein the operation screen information, the operation code information or the like. The communication unit 17 transmits the operation screen information, the operation code information, the status information or the like to the remote controller 100 via an antenna 18, and receives the operation command or the like from the remote controller 100.

The control unit 13 retains operation information that indicates the state of the electronic device 10. The control unit 13 transmits the status information that indicates the current state to the remote controller 100 depending on the change in the state of the electronic device 10, over the period of time while being remotely operated by the remote controller 100. Further, when received the operation command from the remote controller 100, the control unit 13 executes a function corresponding to the received operation command based on the operation code information.

### [2. Operation of remote controller system]

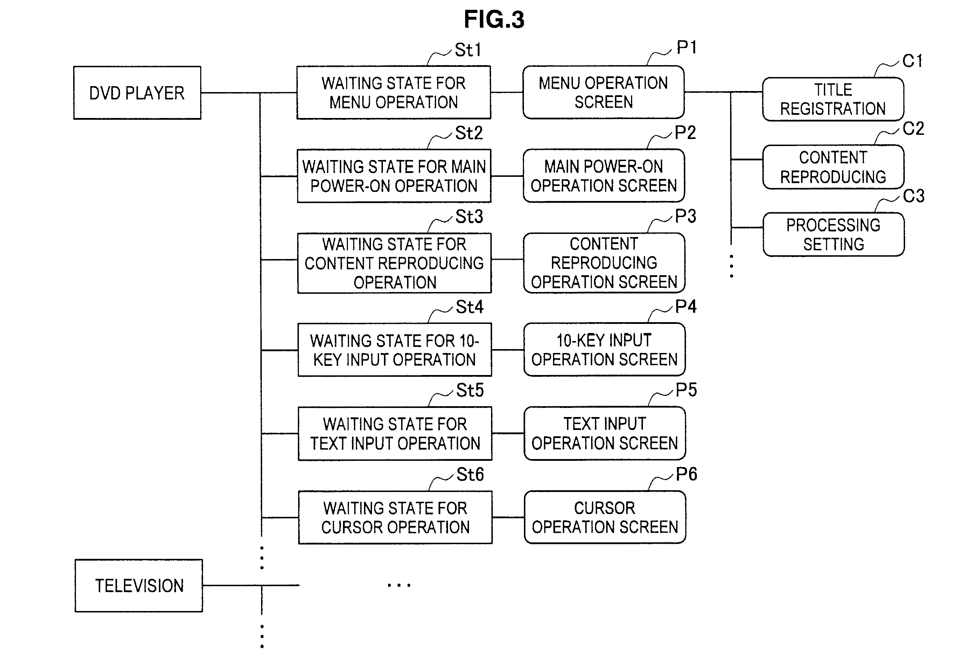

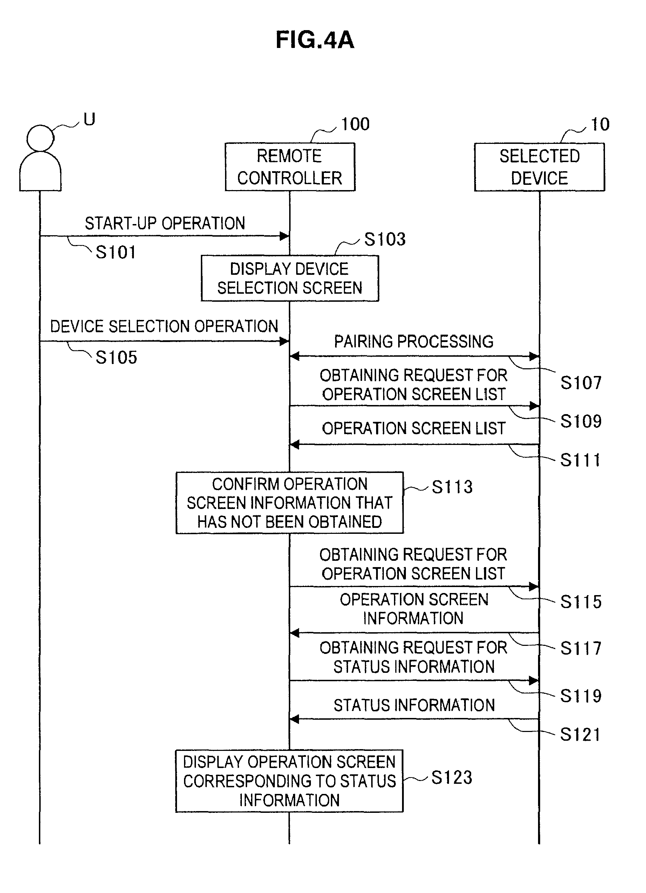

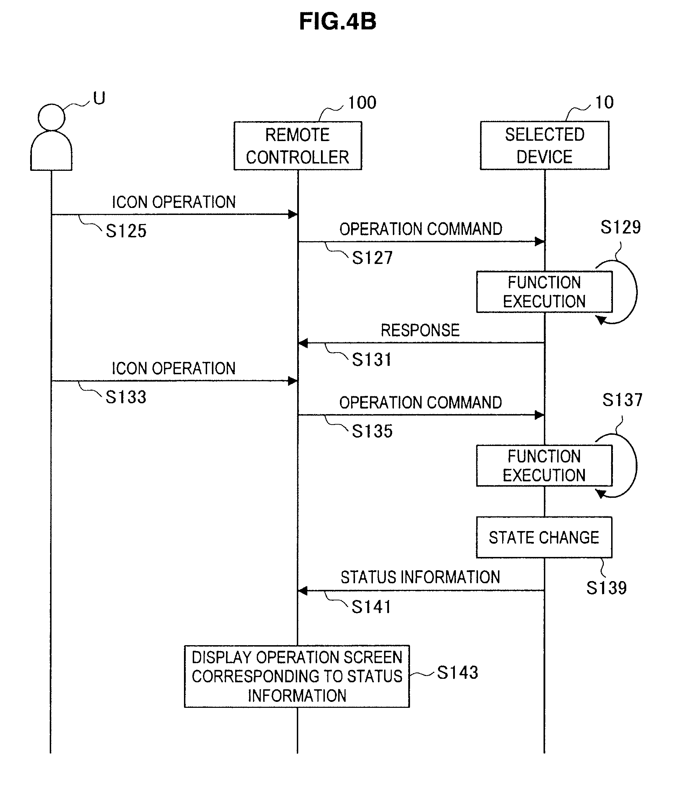

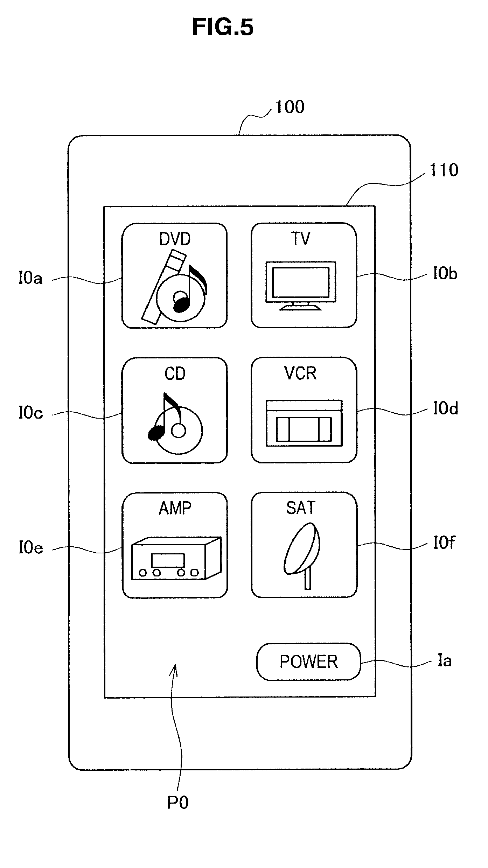

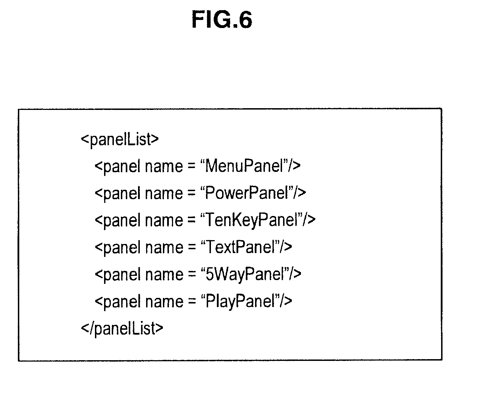

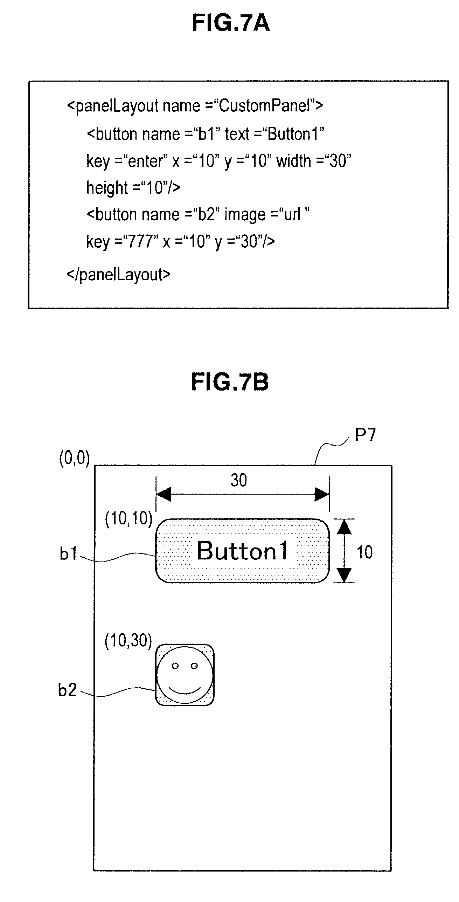

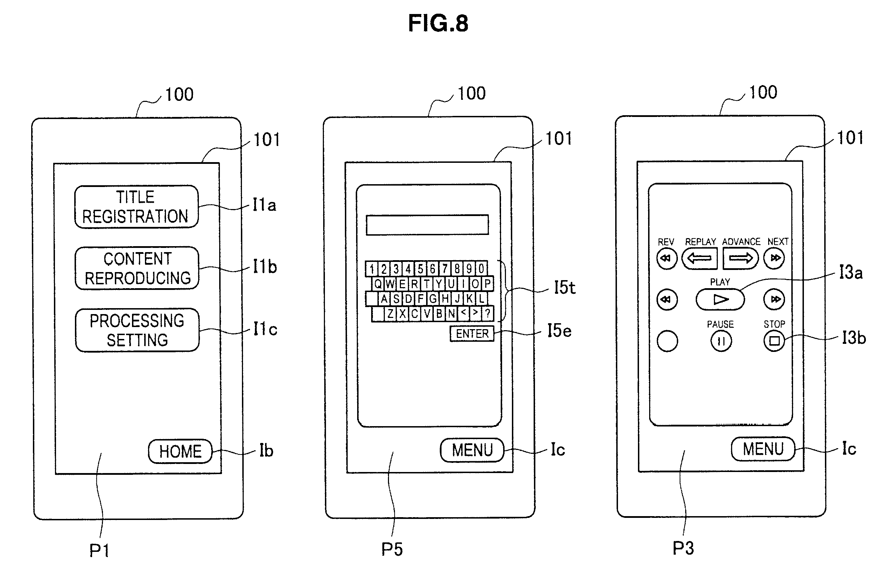

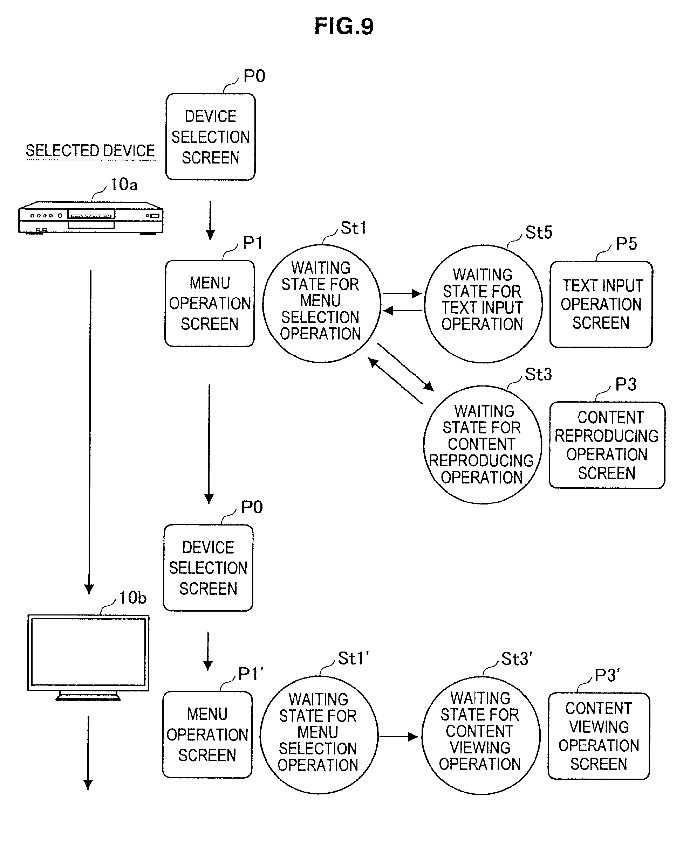

In the following, an operation of the remote controller system according to the embodiment of the present invention will be described with reference to FIG. 3 to FIG. 8. FIG. 3 is a diagram showing an example of correspondence relationship among a state of an electronic device 10, an operation screen P, and code information. FIG. 4A and 4B are sequence diagrams showing an operation of the remote controller system. FIG. 5 is a diagram showing an example of a device selection screen P0. FIG. 6 is a diagram showing an example of an operation screen list. FIG. 7A and 7B are diagrams showing an example of generation of an operation screen. FIG. 8 is a diagram showing an example of an operation screen. FIG. 9 is a diagram showing an example of operation of the remote controller system.

FIG. 3 illustrates an example of correspondence relationship among a state, the operation screen P and the code information according to each electronic device 10. Here, an explanation will be given on a case of a DVD player 10a, but a case of other electronic devices 10 including the television 10b will be explained in the same manner.

As shown in FIG. 3, the status information of the DVD player 10a indicates the states such as a waiting state for menu operation St1, a waiting state for main power-on operation St2, a waiting state for content reproducing operation St3, a waiting state for 10-key input operation St4, a waiting state for text input operation St5, a waiting state for cursor operation St6 or the like.

Each of the state corresponds to a menu operation screen P1, a main power-on operation screen P2, a content reproducing operation screen P3, a 10-key input operation screen P4, a text input operation screen P5, and a cursor operation screen P6 respectively. Moreover, each operation screen P is associated its corresponding code information; for example, the menu operation screen P1 is associated with the code information C1, C2, C3, etc corresponding to each of a title registration, a content reproducing, a processing setting, or the like.

Here, the waiting state for menu operation St1, the waiting state for main power-on operation St2 and the waiting state for content reproducing operation St3 are the state waiting respectively for an operation to select a menu item by the user U, an operation to turn-on the main power, and an operation to reproduce the content. Moreover, the waiting state for 10-key input operation St4, the waiting state for text input operation St5 and the waiting state for cursor operation St6 are the state waiting respectively for an operation to input a 10-key by the user U, an operation to input text, and an operation of a cursor.

FIG. 4A and 4B mainly shows an operation of the remote controller 100. As FIG. 4A shows, when the user U starts-up the remote controller 100 (step S101), the control unit 103 controls the display panel 101a to display the device selection screen P0 (S103).

As shown in FIG. 5, in the device selection screen P0 a device selection icon I which indicates the electronic device 10 being selectable as an operation object. FIG. 5 shows a DVD player selection icon 10a, a television selection icon I0b, a CD player selection icon 10c, a VCR selection icon 10d, an audio amplifier selection icon 10e, and a satellite tuner selection icon 10f. Note that in the device selection screen P0, a power icon I0a is shown to turn-off the power to the remote controller 100.

When the user U selects the electronic device on the device selection screen P0 (S105), the control unit 103 performs a pairing processing to the selected electronic device 10 (the selected device 10) (S107).

The pairing processing exchanges device IDs of both parties between the remote controller 100 and the selected device 10. Note that as the device ID, a MCA address that is assigned at a time of production of the remote controller 100 and the electronic device 10, and an address generated from the MCA address, or the like are used.

For example, assume a case where the pairing processing is performed between the remote controller 100 and the DVD player 10a at a location where the DVD player 10a and the television 10b are arranged. In this case, when the user U operates the device selection icon 10a, the remote controller 100 simultaneously transmits a paring request and the DVD player 10a and the television 10b receives the paring request.

The paring request includes an ID of the remote controller 100, and a device classification code that indicates a device classification (in this example, a "DVD player") of the selected device 10 that is a paring object. Note that as the device classification code, for example, an existing commodity code such as JAN (Japanese Article Number) code or the like is used.

The DVD player 10a and the television 10b determine whether the device classification code included in the paring request is identical to the own device classification code. In this case, the device classification code included in the paring request if a "DVD player", the DVD player 10a determines that the deice classification code are identical and transmits a response that includes the own device ID.

When receiving the response from the DVD player 10a, the remote controller 100 register the device ID of the DVD player 10a as the device ID in the memory 105 or the like. Then after that, between the remote controller 100 and the DVD player 10a, information will be transmitted and received with the device ID.

When the pairing processing is completed, the control unit 103 controls the communication unit 107 to transmit an obtaining request for operation screen list to the selected device 10 (S 109).

When receiving the obtaining request, the control unit 13 of the selected device 10 generates an operation screen list from operation screen information stored in the memory 105. Here, the operation screen list is a list of the operation screen information, and includes an ID, version or the like of the operation screen information. Then the control unit 13 of the selected device 10 controls the communication unit 107 to transmit the operation screen list to the remote controller 100 (s111).

For example, in the operation screen list shown in FIG. 6, as names of the operation screen P, a menu operation screen (Menu Panel), a main power-on operation screen (Power Panel), a 10-key input operation screen (Ten Key Panel), a text input operation screen (Text Panel), a cursor operation screen (5 WayPanel), and a content reproducing operation screen (Play Panel) are shown.

When received the operation screen list, the control unit 103 compares the operation screen list to the operation screen information that the electronic device 10 obtains. Then the control unit 103 confirms whether the operation screen information that has not been obtained is included in the operation screen list (S 113). The operation screen information that has not been obtained is to be specified based on the ID, version or the like.

If the operation screen information that has not been obtained is included, the control unit 103 controls the communication unit 107 to transmit an obtaining request for the operation screen information th at has not been obtained (S 115). Moreover, the control unit 103 controls the communication unit 107 to transmit an obtaining request for the operation code information corresponding to the operation screen information that has not been obtained. Here, the obtaining request for the operation screen information and the operation code information include information to identify the information to be requested to obtain (ID, version or the like). Note that if there is no operation screen information that has not been obtained, the control unit 103 skips the processing in step S 115 and S117 and performs the processing of step S119.

When received the obtaining request, the control unit 13 of the selected device 10 reads the operation screen information that has not been obtained and the operation code information from the memory 15, and controls the communication unit 17 to transmit the obtained operation screen information that has not been obtained and the operation code information along with the corresponding state to the remote controller 100 (S117). When received the operation screen information that has not been obtained and the operation code information, the control unit 103 of the remote controller 100 associates the received operation screen information and the operation code information with the selected device 10 and the state of the selected device to store into the memory 105.

FIG.. 7A shows, as an example of the operation screen information, operation screen information for generating an arbitrary setting operation screen P7 (Custom Panel). The operation screen information defines therein an icon b1 (Button1), a specification (placement, size, image, etc) of an icon b2 (a mark of face). The control unit 103 generates the arbitrary setting operation screen based on the operation screen information.

FIG.. 7B shows the generated arbitrary setting operation screen P7. The icon b1 is defined by definition information <button name="b1" text="Button1" key="enter" x="10" y="10" width="30" height=" 10"/>. The definition information enables to display the icon b1 with a width of 30, a height of 30, and a text of "Button1", assuming a coordinate at the left upper corner of the icon is (10, 10). Then in accordance with the operation of the icon b1, the operation command "enter" is to be transmitted to the selected device 10.

The icon b2 is defined by definition information <button name="b2" image="url" key="777" x="10" y="30"/>. The definition information enables to display the icon b2 with in an image (a mark of face) specified by "url", assuming a coordinate at the left upper corner of the icon is (10, 30). Then in accordance with the operation of the icon b2, the operation command "777" is to be transmitted to the selected device 10.

When having all the operation screen information corresponding to the selected device 10 lined up, the control unit 103 controls the communication unit 107 to transmit the obtaining request for status information to the selected device 10 (S119). When received the obtaining request for status information, the control unit 13 of the selected device 10 controls the communication unit 17 to transmit the status information that indicates the current state of the selected device 10 to the remote controller 100 (S121). Note that the control unit 13 of the selected device 10 may control the communication unit 17 to transmit the status information to the remote controller 100 without receiving the obtaining request for status information.

When receiving the status information, the control unit 103 selects the operation screen P corresponding to the state of the selected device 10, and controls the display panel 101a to display the selected operation screen P (S123).

FIG. 8 shows, as an example of the operation screen P corresponding to the DVD player, the menu operation screen P1, the text input operation screen P5, and the content reproducing operation screen P3.

As shown in FIG. 8, in the menu operation screen P1, a title registration icon I1a, a content reproducing icon I1b, a processing setting icon I1c, or the like are displayed as icons I to be selected as menu items. In the text input operation screen P5, text icon 15t for an alphabet or the like, and an ENTER icon 15e are displayed as icons I used for text input operation. In the content reproducing operation screen P3, a replay icon I3a, and a stop icon I3b or the like are shown as an icons I used for the content reproduction operation.

In the menu operation screen P1, a Home icon Ib is displayed for a switching operation to the device selection screen P0. In the operation screen P (an operation screen P3, P5 or the like) other than the menu operation screen P0, a Menu icon Ic is displayed for a switching operation to the menu operation screen P1.

Next, as shown in FIG. 4B, when an icon I is manipulated on the operation screen P (S125), the control unit 103 controls the communication unit 107 to transmit a corresponding operation command to the selected device 10, based on the operation code information corresponding to the manipulated icon I (S127).

When received the operation command, the control unit 13 of the selected device 10 performs the function corresponding to the operation command (S129). If the state of the selected device 10 has not been changed, the control unit 13 of the selected device 10 controls the communication unit 17 to transmit the response toward the operation command to the remote controller 100 (S131).

On the other hand, if functions is performed in accordance with the icon operation (S133 to S137) and the state of the selected device 10 has been changed (S139), the control unit 13 of the selected device 10 controls the communication unit 17 to transmit the status information that indicates the state after the change to the remote controller 100 (S141). Here, the change in the state of the selected device 10 may be a change depending on a function execution corresponding to the operation command, and may be a change not depending on a function execution corresponding to the operation command.

When the state of the selected device 10 has been changed, the control unit 103 controls the display panel 101a to display the screen P corresponding to the state of the selected device 10 based on the current status information (S 143).

Here, in the processing of step S41, the control unit 103 is to obtain passively the status information from the selected device 10. However, the control unit 103 may obtain actively the status information from the selected device 10 using a regular polling. In this case, the remote controller 100 substantially monitors the state of the selected device 10.

Then, between the remote controller 100 and the selected device 10, the processing from step S125 to S 143 is to be repeated. Note that if the user U changes the selection of the electronic device on the device selection screen P0 (S105), the control unit 103 performs the subsequent processing after step S107 to the changed selected device 10, as described above.

Hereinafter, with reference to FIG. 9, an explanation will be given on an example of operations of the remote controller system. As the example of the operations of the remote controller system, it is assumed a case where the DVD player 10a is selected at first to perform an operation of registering a title and an operation of reproducing content, then the television 10b is selected to perform an operation of viewing the content.

In this case, the state of the DVD player 10a goes through the waiting state for menu operation St1 of the DVD player 10a, and transits to the waiting state for text input operation St5 and the waiting state for content reproducing operation St3. And the state of the television 10b transits from the waiting state for menu operation St1' of the television 10b to the waiting state for content viewing operation St3' of the television 10b.

When receiving the status information (the waiting state for menu operation St1), the remote controller 100 displays the menu operation screen P1. Then, when the title registration icon I1a is manipulated, the remote controller 100 transmits the operation command corresponding to the function execution of the processing of title registration to the DVD player 10a.

When receiving the operation command, the DVD player 10a performs a preprocessing for starting the function of title registration. Then, since the operation state of the DVD player 10a has been changed, the DVD player 10a transmits the status information (the waiting state for text input operation St5) to the remote controller 100.

When receiving the status information, the remote controller 100 displays the text input operation screen P5. Then, when a title is input on the operation screen P5 and the ENTER icon 15e is manipulated, the remote controller 100 transmits the operation command corresponding to a ending of the operation of text input to the DVD player 10a.

When receiving the status information, the DVD player 10a performs a post processing for ending the function of title registration. Then, since the operation state of the DVD player 10a has been changed, the DVD player 10a transmits the status information (the waiting state for menu operation St1) to the remote controller 100.

When receiving the status information, the remote controller 100 displays the menu operation screen P1. Then, when the content reproducing icon I1b is manipulated on the operation screen P1, the remote controller 100 transmits the operation command corresponding to the function execution of content reproducing to the DVD player 10a.

When receiving the operation command, the DVD player 10a performs a preprocessing for starting the function of content reproducing. Then, since the operation state of the DVD player 10a has been changed, the DVD player 10a transmits the status information (the waiting state for content reproducing operation St3) to the remote controller 100.

When receiving the status information, the remote controller 100 displays the content reproducing operation screen P3. Then, when the replay icon I3a is manipulated on the operation screen P3, the remote controller 100 transmits the operation command corresponding to starting of content reproducing to the DVD player 10a.

When receiving the operation command, the DVD player 10a performs a preprocessing for starting the function of content reproducing, then transmits a starting response of the processing to the remote controller 100.

When the Menu icon Ic is manipulated on the operation screen P3, the remote controller 100 displays the menu operation screen P 1. Then, when the Home icon Ib is manipulated on the operation screen P1, the remote controller 100 displays the device selection screen P0.

When the television selection icon I0b is manipulated on the operation screen P0, the remote controller 100 interrupts the remote operation of the DVD player 10a, and performs a polling processing with the television 10b. Then when the polling processing is completed, the remote controller 100 changes the selected device 10 from the DVD player 10a to the DVD player 10a to the television 10b. After changing the selected device 10, the remote controller 100 obtains the operation screen list from the television 10b, and if needed, obtains, from the television 10b, the operation screen information that has not been obtained.

When receiving the status information (the waiting state for menu operation St1'), the remote controller 100 displays the menu operation screen P1'. Then, when the content viewing icon I that is no shown herein is manipulated, the remote controller 100 transmits the operation command corresponding to the function execution of the content viewing to the television 10b. This enables the user U to smoothly operate a plurality of electronic devices such as the DVD player 10a, the television 10b or the like using the remote controller 100.

### [3. Conclusion]

In the remote controller system according to the embodiment of the present invention, the status information that indicates the state of the electronic device 10 can obtain from the electronic device 10, and the operation screen P corresponding to the status information is displayed on the display panel 101a depending on the state change of the electronic device 10. This enables the user U operates the desired icon I on the operation screen P corresponding to the state of the electronic device 10 without switching the operation screen P manually.

Although the preferred embodiments of the present invention have been described in the foregoing with reference to the drawings, the present invention is not limited thereto. It should be understood by those skilled in the art that various modifications, combinations, sub-combinations and alterations may occur depending on design requirements and other factors insofar as they are within the scope of the appended claims or the equivalents thereof.

For example, in the explanation of the above embodiment, the remote controller 100 selectively obtains the operation screen list and the operation screen information that has not been obtained from the selected device 10. However, the remote controller 100 may obtain all the operation screen information included in the operation screen list from the selected device 10 along with the operation screen list. In this case, the remote controller 100 is to choose some of the operation screen information that has not been obtained based on the operation screen list. Or the selected device 10 may obtain the operation screen list of the operation screen information that the remote controller 100 obtains, and may selectively provide the operation screen information that is not included in the operation screen list to the remote controller 100.
In so far as the embodiments of the invention described above are implemented, at least in part, using a software-controlled data apparatus, it will be appreciated that a computer program providing such software control and a transmission, storage or other medium by which such a computer program is provided are envisaged as aspects of the present invention.
The present application contains subject matter related to that disclosed in Japanese Priority Patent Application JP 2009-224985 filed in the Japan Patent Office on September 29, 2009, the entire content of which is hereby incorporated by reference.

## Claims

1. A remote operation device comprising:
a display panel for displaying a predetermined operation screen;
a detection unit for detecting an operation input to the display panel,
a remote operation unit for remotely operating an electronic device in accordance with the operation input;
a state information obtaining unit for obtaining state information that indicates a state of the electronic device from the electronic device; and
a display control unit for displaying an operation screen corresponding to the state information on the display panel in accordance with a change in the state of the electronic device.

2. The remote operation device according to claim 1 further comprising a device selection unit for selecting the electronic device to be operated remotely.

3. The remote operation device according to claim 2, further comprising:
an operation screen information retaining unit for retaining operation screen information to generate an operation screen corresponding to each electronic device;
an operation screen generating unit for generating an operation screen corresponding to the selected electronic device based on the operation screen information.

4. The remote operation device according to claim 3, further comprising:
an operation screen list obtaining unit for obtaining an operation screen list corresponding to the selected electronic device from the electronic device: and
an operation screen information obtaining unit for obtaining, from the electronic device, operation screen information of an operation screen that has not been obtained among the operation screens included in the list obtained.

5. The remote operation device according to one of the claims 1 to 4 wherein the state information obtaining unit obtains the change in the state notified by the electronic device as the state information.

6. The remote operation device according to one of the claims 1 to 5 wherein the state information obtaining unit obtains the state information regularly from the electronic device.

7. The remote operation device according to one of the claims 1 to 6 wherein the change in the state of the electronic device is at least one of either a change depending on the operation input or a change not depending on the operation input.

8. A remote operation device system comprising:
a remote operation device according to one of the claims 1 to 7
an electronic device remotely operated by the remote operation device.

9. A remote operation method comprising:
obtaining state information that indicates a state of an electronic device from the electronic device;
displaying a predetermined operation screen corresponding to the state information on a display panel in accordance with a change in the state of the electronic device; and
detecting an operation input to the display panel to remotely operate the electronic device in accordance with the operation input.

10. A program causing a computer to execute a remote operation method, the remote operation method comprising:
obtaining state information that indicates a state of an electronic device from the electronic device;
displaying a predetermined operation screen corresponding to the state information on a display panel in accordance with a change in the state of the electronic device; and
detecting an operation input to the display panel to remotely operate the electronic device in accordance with the operation input.
